# EUROPEAN PATENT SPECIFICATION

(11) **EP 3 786 501 B1**
(45) Date of publication and mention of the grant of the patent: **31.01.2024**
(21) Application number: 19792416.0
(22) Date of filing: 16.04.2019
(51) Int. Cl.: F16K 31/06, F16K 15/06, F16K 17/04, F16K 17/10, F16K 15/14, F16K 17/06

(54) **SOLENOID VALVE**
MAGNETVENTIL
ÉLECTROVANNE

(30) Priority: 23.04.2018 CN 201810366546
(43) Date of publication of application: 03.03.2021
(73) Proprietor: Coburg Technology (Jiangsu) Co., Ltd., Suzhou, Jiangsu 215699 (CN)
(72) Inventor: SUN, Jian, Suzhou, Jiangsu 215699 (CN); JIANG, Wan, Suzhou, Jiangsu 215699 (CN); ZHI, Haibo, Suzhou, Jiangsu 215699 (CN)
(74) Representative: Cabinet Bleger-Rhein-Poupon
(86) International application number: PCT/CN2019/082877
(87) International publication number: WO 2019/205989

(56) References cited:
- EP-A1- 1 256 762
- CN-A- 101 446 357
- CN-A- 104 930 229
- CN-A- 106 555 900
- CN-A- 108 518 519
- CN-U- 202 280 910
- CN-U- 202 901 477
- CN-U- 206 958 364
- CN-U- 208 221 717
- CN-Y- 201 062 672
- CN-Y- 201 221 615
- CN-Y- 201 326 821
- JP-U- S5 793 670
- US-A- 4 328 827
- US-A- 5 605 177
- US-A1- 2007 158 602
- US-B2- 7 546 848

## Description

### Technical Field of the Invention

The present invention relates to a solenoid valve.

### Background of the Invention

The solenoid valve is electromagnetically controlled to open and close the valve. It is generally used to control parameters such as the direction, flow rate, speed of fluid in the system. The solenoid valve can cooperate with different circuits to achieve the desired control, and the precision and flexibility of the control can be guaranteed.

In existing solenoid valves, the structure thereof is generally simple, which cannot achieve a good pressure relief effect for the rear-end blockage problem in the system.

EP1256762A1 is the prior art closest to the invention and discloses a pressure valve mechanism comprised of valve seat element with a cylindrical valve hole, ball valve piece which can fit on and separate from the sealing surface in the valve chamber above valve hole of the valve seat element, a spring for urging ball valve piece in the direction it is seated and lid nut for positioning the valve seat element inside joint body, the lid nut has a pressure release hole formed at the center thereof. Spring is held between ball valve piece and lid nut. Other valves are disclosed in US4328827A, JPS5793670U and CN104930229A.

### Summary of the Invention

The purpose of the present invention is to provide a solenoid valve which can achieve a good pressure relief effect for the rear-end blockage problem in the system.

To achieve the above purpose, the technical solution employed by the present invention is as follows:
a solenoid valve, comprises a first pipe, an electromagnetic mechanism to control open-on and cut-off of the first pipe, and a pressure relief mechanism in communication with the first pipe;
wherein the pressure relief mechanism comprises a first mounting base with a first cavity, a second pipe in communication with the first cavity and the first pipe, respectively, an outlet opening in communication with the first cavity, and an overflow opening in communication with the first cavity and located above the outlet opening, further wherein an communicating opening between the second pipe and the first cavity is located below the outlet opening;
the pressure relief mechanism further comprises a first movable mechanism disposed in the first cavity in a manner of being movable up and down for blocking or communicating the communicating opening and the outlet opening, and a second movable mechanism disposed in the first movable mechanism in a manner of being movable up and down for blocking or communicating the communicating opening and the overflow opening;
the communicating opening is located at the bottom of the first cavity, and the pressure relief mechanism further comprises a sealing mechanism located above the second pipe and covering the communicating opening in a manner of being movable up and down, wherein the sealing mechanism comprises:
   a sealing plate covering the communicating opening, which is capable of being sucked onto the communicating opening when a negative pressure occurs in the second pipe, and
   a guide column disposed below the sealing plate;
   wherein a through hole through which the guide column passes is provided in the first mounting base, and a stop block for preventing the guide column from emerging from the through hole upward is provided on a lower end portion of the guide column.

Preferably, the first movable mechanism comprises a column-shaped body with a second cavity, and a ring-shaped separator surrounding a lower portion of the column-shaped body, a first blocking member for pressing against a lower surface of the ring-shaped separator and a second blocking member for pressing against an upper surface of the ring-shaped separator are provided in the first cavity, the outlet opening is located between the first blocking member and the second blocking member in an up-down direction, and the communicating opening is located below the ring-shaped separator.

More preferably, the first blocking member is ring-shaped, and the communication opening is opened on the first blocking member.

Preferably, the second movable mechanism comprises a movable column passing through the second cavity in a manner of being movable up and down, a first ring-shaped protrusion located in the second cavity and surrounding a lower portion of the movable column, a second ring-shaped protrusion located above the first ring-shaped protrusion and against an inner surface of the second cavity, and a first elastic member between the first ring-shaped protrusion and the second ring-shaped protrusion, a gap is arranged between an outer surface of the first ring-shaped protrusion and the inner surface of the second cavity, another gap is arranged between the outer surface of the movable column and an inner surface of the second ring-shaped protrusion are arranged with a gap, and the overflow opening is located above the second cavity.

Preferably, the solenoid valve further comprises a pressure stabilization mechanism arranged between the first pipe and the second pipe;
the pressure stabilization mechanism comprises a second mounting base with a third cavity, the third cavity is in communication with the first pipe and the second pipe, respectively;
the pressure stabilization mechanism further comprises a fourth cavity, a first partition plate disposed between the third cavity and the fourth cavity, a movable member movably disposed in the third cavity along a direction close to or away from the first partition plate, and a second elastic member disposed in the fourth cavity, one end of the second elastic member is disposed against the first partition plate, the other end of the second elastic member is disposed against an inner surface of the fourth cavity, and an elastic stretch direction of the second elastic member is parallel to a moving direction of the movable member.

More preferably, the pressure stabilization mechanism further comprises a second partition plate arranged on the first partition plate and located in the third cavity, and a third blocking member disposed in the third cavity for pressing against the second partition plate to block water flow from the second partition plate to the second pipe.

More preferably, the pressure stabilization mechanism further comprises an adjustment member adjustably disposed on the second mounting base for pressing against the second elastic member, a moving direction of the adjustment member is parallel to the elastic stretch direction of the second elastic member.

More preferably, a fifth cavity is provided in the movable member, and an inlet opening for communicating the fifth cavity and the third cavity is provided on the movable member.

Due to the use of the above technical solutions, the present invention has the following advantages over the prior art: in the solenoid valve of the present invention, by providing the pressure relief mechanism, the water flow in the first cavity is discharged through the overflow opening when the outlet opening is blocked, which effectively protect the overall system.

### Brief Description of the Drawings

Figure 1 is a schematic diagram of a device of an embodiment according to the present invention;
Figure 2 is a front view of Figure 1;
Figure 3 is a first cross-sectional view along line AA of Figure 2;
Figure 4 is a second cross-sectional view along line AA of Figure 2, wherein the pressure stabilization mechanism is not shown;
Figure 5 is a third cross-sectional view along line AA of Figure 2, wherein the pressure stabilization mechanism is not shown;
wherein: 1 - electromagnetic mechanism; 2 - first cavity; 3 - first mounting base; 4 - second pipe; 5 - outlet opening; 6 - overflow opening; 7 - communicating opening; 8 - second cavity; 9 - column-shaped body; 10 - ring-shaped separator; 11 - first blocking member; 12 - second blocking member; 13 - movable column; 14 - first ring-shaped protrusion; 15 - second ring-shaped protrusion; 16 - first elastic member; 17 - sealing plate; 18 - guide column; 19 - stop block; 20 - third cavity; 21 - second mounting base; 22 - fourth cavity; 23 - first partition plate; 24 - movable member; 25 - second elastic member; 26 - second partition plate; 27 - third blocking member; 28 - adjustment member; 29 - inlet opening.

### Detailed Description of Exemplary Embodiments

In the following, the technical solution of the present invention is further explained combining with the accompanying drawings.

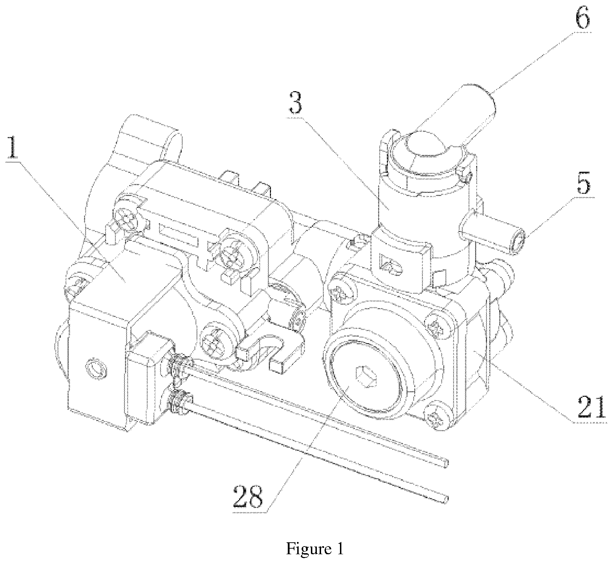

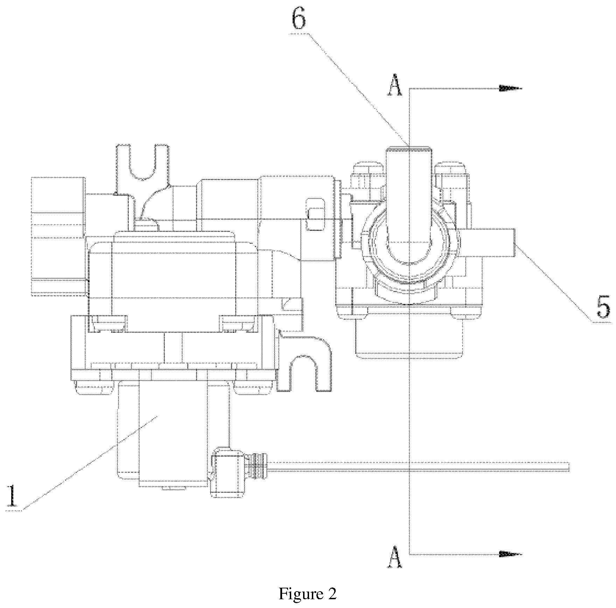

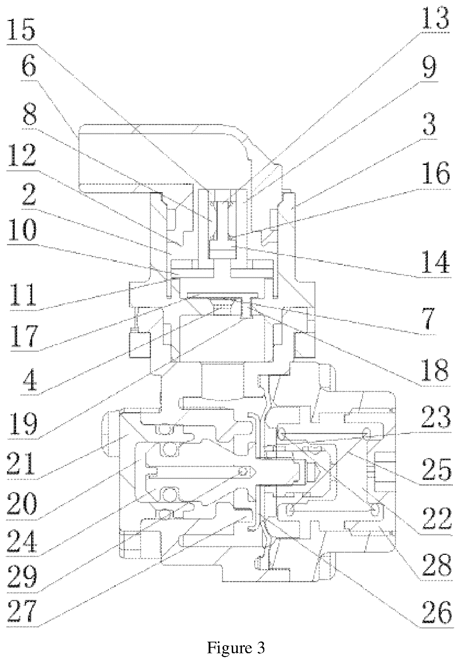

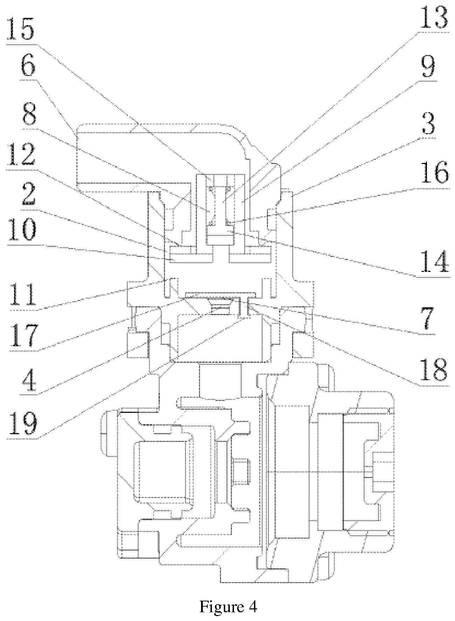

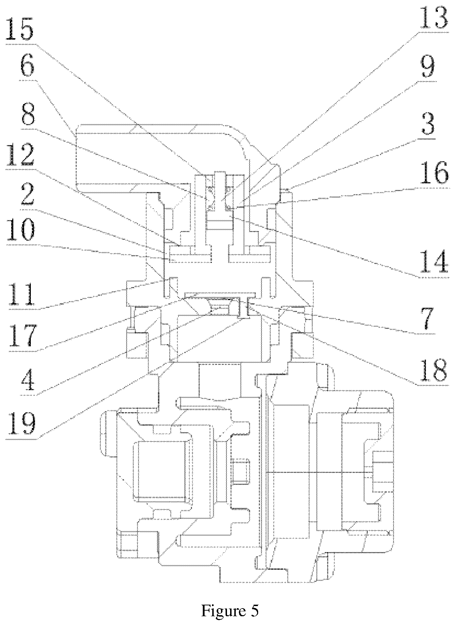

Referring to Figures 1 - 5, the above solenoid valve, comprises a first pipe, an electromagnetic mechanism 1 to control open-on and cut-off of the first pipe, and a pressure relief mechanism in communication with the first pipe.

The pressure relief mechanism comprises a first mounting base 3 with a first cavity 2, a second pipe 4 in communication with the first cavity 2 and the first pipe, respectively, an outlet opening 5 disposed on the first mounting base 3 and in communication with the first cavity 2, and an overflow opening 6 disposed on the first mounting base 3 and in communication with the first cavity 2 and located above the outlet opening 5, an communicating opening 7 between the second pipe 4 and the first cavity 2 is located below the outlet opening 5. In the present embodiment, the second pipe 4 is distributed in the up-down direction, the first pipe is located below the second pipe 4, and the first cavity 2 is located above the second pipe 4.

The pressure relief mechanism further comprises a first movable mechanism disposed in the first cavity 2 in a manner of being movable up and down for blocking or communicating the communicating opening 7 and the outlet opening 5, and a second movable mechanism disposed in the first movable mechanism in a manner of being movable up and down for blocking or communicating the communicating opening 7 and the overflow opening 6.

The first movable mechanism comprises a column-shaped body 9 with a second cavity 8, and a ring-shaped separator 10 surrounding a lower portion of the column-shaped body 9, a first blocking member 11 pressing against a lower surface of the ring-shaped separator 10 and a second blocking member 12 pressing against an upper surface of the ring-shaped separator 10 are provided in the first cavity 2, the outlet opening 5 is located between the first blocking member 11 and the second blocking member 12 in the up-down direction, and the communicating opening 7 is located below the ring-shaped separator 10. In the present embodiment, the first blocking member 11 is ring-shaped, and the communication opening 7 is located on the first blocking member 11. By this configuration, when water flow does not enter into the first cavity 2, a seal cavity is formed between the ring-shaped separator 10 and the first blocking member; when water flow enters into the first cavity 2, the ring-shaped separator 10 is gradually lifted upward, and after the ring-shaped separator 10 is lifted up to a height over the height of the outlet opening 5, the water flow can flow out of the outlet opening 5, and when coming into contact with the second blocking member 12, the ring-shaped separator 10 stops rising.

The second movable mechanism comprises a movable column 13 passing through the second cavity 8 in a manner of being movable up and down, a first ring-shaped protrusion 14 located in the second cavity 8 and surrounding a lower portion of the movable column 13, a second ring-shaped protrusion 15 located above the first ring-shaped protrusion 14 and against an inner surface of the second cavity 8, and a first elastic member 16 between the first ring-shaped protrusion 14 and the second ring-shaped protrusion 15, an elastic stretch direction of the first elastic member 16 is along the up-down direction. Between an outer surface of the first ring-shaped protrusion 14 and the inner surface of the second cavity 8, a gap is arranged; the movable column 13 passes through the second ring-shaped protrusion 15 in a manner of being movable up and down, and between the outer surface of the movable column 13 and an inner surface of the second ring-shaped protrusion 15, another gap is arranged. The overflow opening 6 is located above the second cavity 8. By this configuration, when the outlet opening 5 is blocked, the water flow lifts up the movable column 13 upward, the first elastic member 16 is compressed, and the water flow goes upward into the overflow opening 6 from the second cavity 8, which forms pressure relief protection for the system.

The communicating opening 7 is located at the bottom of the first cavity 2, and the pressure relief mechanism further comprises a sealing mechanism located above the second pipe 4 and covering the communicating opening 7 in a manner of being movable up and down. In the present embodiment, the sealing mechanism comprises a sealing plate 17 located in the first cavity 2 and covering the communicating opening 7, and a guide column 18 disposed below the sealing plate 17 and along the up-down direction. In the first mounting base 3, a through hole through which the guide column 18 passes and in communication with the first cavity 2 is provided, and at the bottom of the guide column 18, a stop block 19 is provided, by the provision of the stop block 19, it can prevent the whole guide column 18 from emerging from the through hole upward. By the provision of the seal mechanism, when negative pressure occurs in the second pipe 4, the sealing plate 17 can be directly sucked onto the communicating opening 7 by this negative pressure, preventing the water flow in the second cavity 2 from back flow into the second pipe 4, which forms an unidirectional protection for the system.

The solenoid valve further comprises a pressure stabilization mechanism arranged between the first pipe and the second pipe 4. The pressure stabilization mechanism comprises a second mounting base 21 with a third cavity 20, the third cavity 20 is in communication with the second pipe and the second pipe 4, respectively; in the present embodiment, the second mounting base 21 is located below the first mounting base 3, and the third cavity 20 is located below the second pipe 4.

The pressure stabilization mechanism further comprises a fourth cavity 22, a first partition plate 23 disposed between the third cavity 20 and the fourth cavity 22, a movable member 24 movably disposed in the third cavity 20 along a direction close to or away from the first partition plate 23, and a second elastic member 25 disposed in the fourth cavity 22, one end of the second elastic member 25 is disposed against the first partition plate 23, the other end of the second elastic member 25 is disposed against an inner surface of the fourth cavity 22, and an elastic stretch direction of the second elastic member 25 is parallel to a moving direction of the movable member 24. The arrangement direction of the third cavity 20 and the fourth cavity 22 is parallel to the moving direction of the movable member 24, that is, parallel to the elastic stretch direction of the second elastic member 25. By this configuration, when the flow pressure in the third cavity 20 is too large, the water flow applies pressure to the movable member 24, and then the movable member 24 applies pressure to the second elastic member 25 to convert the kinetic energy of the water flow into the elastic potential energy of the second elastic member 25, which has the effect of pressure stabilization on the water flow out off the third cavity 20. In the present embodiment, a fifth cavity is disposed in the movable member 24, and an inlet opening 29 for communicating the fifth cavity and the third cavity 20 is disposed on the movable member 24, which can play a better role in pushing the movable member 24 by leading water flow in the movable member 24.

The pressure stabilization mechanism further comprises a second partition plate 26 arranged on the first partition plate 23 and located in the third cavity 20, and a third blocking member 27 disposed in the third cavity 20 for pressing against the second partition plate 26, in the present invention, the third blocking member 27 is ring-shaped, and between the third blocking member 27 and the second partition plate 26, a seal cavity for blocking water flow from the second partition plate 26 to the second pipe is formed, and when the second partition plate 26 is pushed by the movable member 24, a gap is produced between the second partition plate 26 and the third blocking member 27, and the water flow can flow to the second pipe through this gap.

The pressure stabilization mechanism further comprises an adjustment member 28 adjustably disposed on the second mounting base 21 for pressing against the second elastic member 25, a moving direction of the adjustment member 28 is parallel to the elastic stretch direction of the second elastic member 25. By this provision, it can adjust the initial compression degree of the second elastic member 25 in the fourth cavity 22 to correspondingly adapt to systems with different flow pressure.

The following specifically explains the working process of the present invention:
The electromagnetic mechanism 1 controls the valve to open, and the water flows from the first pipe into the third cavity 20, and then lifts up the sealing plate 17 along the second pipe 4 and then enters the first cavity 2; the water flow lifts up the ring-shaped separator 10 and the column-shaped body 9 in the first cavity 2 upwards until the upper surface of the ring-shaped separator 10 abuts the second blocking member 12, and the water flows out along the outlet opening 5.

When the flow pressure in the third cavity 20 is too large, the water flow pushes the movable member 24 and compresses the second elastic member 25 by the movable member 23 to convert the kinetic energy of the water flow into the elastic potential energy of the second elastic member 25, which has the effect of pressure stabilization on the water flow out off the third cavity 20;

When the outlet opening 5 is blocked, the water flow lifts up the movable column 13 upward, the first elastic member 16 is compressed, and the water flow goes upward into the overflow opening 6 from the second cavity 8, which forms pressure relief protection for the system;

When negative pressure occurs in the second pipe 4, the sealing plate 17 can be directly sucked onto the communicating opening 7 by this negative pressure, preventing the water flow in the second cavity 2 from back flow into the second pipe 4, which forms an unidirectional protection for the system.

The embodiments described above are only for illustrating the technical concepts and features of the present invention, and are intended to make those skilled in the art being able to understand the present invention and thereby implement it, and should not be concluded to limit the protective scope of this invention, the scope is defined by the appended claims.

## Claims

1. A solenoid valve, comprising a first pipe, an electromagnetic mechanism (1) to control open-on and cut-off of the first pipe, and a pressure relief mechanism in communication with the first pipe;
wherein the pressure relief mechanism comprises a first mounting base (3) with a first cavity (2), a second pipe (4) in communication with the first cavity (2) and the first pipe, respectively, an outlet opening (5) in communication with the first cavity (2), and an overflow opening (6) in communication with the first cavity (2) and located above the outlet opening (5), further wherein an communicating opening (7) between the second pipe (4) and the first cavity (2) is located below the outlet opening (5);
the pressure relief mechanism further comprises a first movable mechanism disposed in the first cavity (2) in a manner of being movable up and down for blocking or communicating the communicating opening (7) and the outlet opening (5), and a second movable mechanism disposed in the first movable mechanism in a manner of being movable up and down for blocking or communicating the communicating opening (7) and the overflow opening (6);
is **characterized in that**, the communicating opening (7) is located at the bottom of the first cavity (2), and the pressure relief mechanism further comprises a sealing mechanism located above the second pipe (4) and covering the communicating opening (7) in a manner of being movable up and down, wherein the sealing mechanism comprises:
a sealing plate (17) covering the communicating opening (7), which is capable of being sucked onto the communicating opening (7) when a negative pressure occurs in the second pipe (4), and
a guide column (18) disposed below the sealing plate (17);
wherein a through hole through which the guide column (18) passes is provided in the first mounting base (3), and a stop block (19) for preventing the guide column (18) from emerging from the through hole upward is provided on a lower end portion of the guide column (18).

2. The solenoid valve according to claim 1, is **characterized in that**, the first movable mechanism comprises a column-shaped body (9) with a second cavity (8), and a ring-shaped separator (10) surrounding a lower portion of the column-shaped body (9), a first blocking member (11) for pressing against a lower surface of the ring-shaped separator (10) and a second blocking member (12) for pressing against an upper surface of the ring-shaped separator (10) are provided in the first cavity (2), the outlet opening (5) is located between the first blocking member (11) and the second blocking member (12) in an up-down direction, and the communicating opening (7) is located below the ring-shaped separator (10).

3. The solenoid valve according to claim 2, is **characterized in that**, the first blocking member (11) is ring-shaped, and the communication opening (7) is opened on the first blocking member (11).

4. The solenoid valve according to any one of the preceding claims, is **characterized in that**, the second movable mechanism comprises a movable column (13) passing through the second cavity (8) in a manner of being movable up and down, a first ring-shaped protrusion (14) located in the second cavity (8) and surrounding a lower portion of the movable column (13), a second ring-shaped protrusion (15) located above the first ring-shaped protrusion (14) and against an inner surface of the second cavity (8), and a first elastic member (16) between the first ring-shaped protrusion (14) and the second ring-shaped protrusion (15), a gap is arranged between an outer surface of the first ring-shaped protrusion (14) and the inner surface of the second cavity (8), and another gap is arranged between the outer surface of the movable column (9) and an inner surface of the second ring-shaped protrusion (15), and the overflow opening (6) is located above the second cavity (8).

5. The solenoid valve according to claim 1, is **characterized in that**, the solenoid valve further comprises a pressure stabilization mechanism arranged between the first pipe and the second pipe (4);
the pressure stabilization mechanism comprises a second mounting base (21) with a third cavity (20), the third cavity (20) is in communication with the first pipe and the second pipe (4), respectively;
the pressure stabilization mechanism further comprises a fourth cavity (22), a first partition plate (23) disposed between the third cavity (20) and the fourth cavity (22), a movable member (24) movably disposed in the third cavity (20) along a direction close to or away from the first partition plate (23), and a second elastic member (25) disposed in the fourth cavity (22), one end of the second elastic member (25) is disposed against the first partition plate (23), the other end of the second elastic member (25) is disposed against an inner suface of the fourth cavity (22), and an elastic stretch direction of the second elastic member (25) is parallel to a moving direction of the movable member (24).

6. The solenoid valve according to claim 5, is **characterized in that**, the pressure stabilization mechanism further comprises a second partition plate (26) arranged on the first partition plate (23) and located in the third cavity (20), and a third blocking member (27) disposed in the third cavity (20) for pressing against the second partition plate (26) to block water flow from the second partition plate (26) to the second pipe (4).

7. The solenoid valve according to claim 5, is **characterized in that**, the pressure stabilization mechanism further comprises an adjustment member (28) adjustably disposed on the second mounting base (21) for pressing against the second elastic member (25), a moving direction of the adjustment member (28) is parallel to the elastic stretch direction of the second elastic member (25).

8. The solenoid valve according to claim 5, is **characterized in that**, a fifth cavity is provided in the movable member (24), and an inlet opening (29) for communicating the fifth cavity and the third cavity (20) is provided on the movable member (24).

## Patentansprüche

1. Magnetventil, umfassend ein erstes Rohr, einen elektromagnetischen Mechanismus (1), um ein Öffnen-An und Schließen-Aus des ersten Rohrs zu steuern, und einen Druckentlastungsmechanismus in Verbindung mit dem ersten Rohr,
wobei der Druckentlastungsmechanismus eine erste Befestigungsbasis (3) mit einem ersten Hohlraum (2), ein zweites Rohr (4) in Verbindung mit dem ersten Hohlraum (2) beziehungsweise dem ersten Rohr, eine Auslassöffnung (5) in Verbindung mit dem ersten Hohlraum (2) und eine Überlauföffnung (6) in Verbindung mit dem ersten Hohlraum (2) und die sich oberhalb der Auslassöffnung (5) befindet, umfasst, ferner wobei sich eine Verbindungsöffnung (7) zwischen dem zweiten Rohr (4) und dem ersten Hohlraum (2) unterhalb der Auslassöffnung (5) befindet;
der Druckentlastungsmechanismus ferner einen ersten bewegbaren Mechanismus, der in dem ersten Hohlraum (2) in einer Weise angeordnet ist, um zum Blockieren oder Verbinden der Verbindungsöffnung (7) und der Auslassöffnung (5) nach oben und unten bewegbar zu sein, und einen zweiten bewegbaren Mechanismus umfasst, der in dem ersten bewegbaren Mechanismus in einer Weise angeordnet ist, um zum Blockieren oder Verbinden der Verbindungsöffnung (7) und der Überlauföffnung (6) nach oben und unten bewegbar zu sein,
das **dadurch gekennzeichnet ist, dass** sich die Verbindungsöffnung (7) an dem Boden des ersten Hohlraums (2) befindet und der Druckentlastungsmechanismus ferner einen Dichtungsmechanismus umfasst, der sich oberhalb des zweiten Rohrs (4) befindet und die Verbindungsöffnung (7) in einer Weise abdeckt, um nach oben und unten bewegbar zu sein, wobei der Dichtungsmechanismus umfasst:
eine Dichtungsplatte (17), die die Verbindungsöffnung (7) abdeckt, die in der Lage ist, auf die Verbindungsöffnung (7) gesaugt zu werden, wenn ein Unterdruck in dem zweiten Rohr (4) auftritt, und
eine Führungssäule (18), die unterhalb der Dichtungsplatte (17) angeordnet ist,
wobei ein Durchgangsloch, durch das die Führungssäule (18) verläuft, in der ersten Befestigungsbasis (3) bereitgestellt ist und ein Anschlagblock (19) zum Verhindern, dass die Führungssäule (18) aus dem Durchgangsloch nach oben austritt, an einem unteren Endabschnitt der Führungssäule (18) bereitgestellt ist.

2. Magnetventil nach Anspruch 1, das **dadurch gekennzeichnet ist, dass** der erste bewegbare Mechanismus einen säulenförmigen Körper (9) mit einem zweiten Hohlraum (8) umfasst und ein ringförmiger Trenner (10), der einen unteren Abschnitt des säulenförmigen Körpers (9) umgibt, ein erstes Blockierelement (11) zum Drücken gegen eine untere Oberfläche des ringförmigen Trenners (10) und ein zweites Blockierelement (12) zum Drücken gegen eine obere Oberfläche des ringförmigen Trenners (10) in dem ersten Hohlraum (2) bereitgestellt sind, wobei sich die Auslassöffnung (5) zwischen dem ersten Blockierelement (11) und dem zweiten Blockierelement (12) in einer Aufwärts-Abwärts-Richtung befindet, und sich die Verbindungsöffnung (7) unterhalb des ringförmigen Trenners (10) befindet.

3. Magnetventil nach Anspruch 2, das **dadurch gekennzeichnet ist, dass** das erste Blockierelement (11) ringförmig ist und die Verbindungsöffnung (7) an dem ersten Blockierelement (11) geöffnet ist.

4. Magnetventil nach einem der vorstehenden Ansprüche, das **dadurch gekennzeichnet ist, dass** der zweite bewegbare Mechanismus eine bewegbare Säule (13), die durch den zweiten Hohlraum (8) in einer Weise verläuft, um nach oben und unten bewegbar zu sein, einen ersten ringförmigen Vorsprung (14), der sich in dem zweiten Hohlraum (8) befindet und einen unteren Abschnitt der bewegbaren Säule (13) umgibt, einen zweiten ringförmigen Vorsprung (15), der sich oberhalb des ersten ringförmigen Vorsprungs (14) und gegen eine Innenoberfläche des zweiten Hohlraums (8) befindet, und ein erstes elastisches Element (16) zwischen dem ersten ringförmigen Vorsprung (14) und dem zweiten ringförmigen Vorsprung (15) umfasst, wobei ein Spalt zwischen einer Außenoberfläche des ersten ringförmigen Vorsprungs (14) und der Innenoberfläche des zweiten Hohlraums (8) eingerichtet ist, und ein anderer Spalt zwischen der Au ßenoberfläche der bewegbaren Säule (9) und einer Innenoberfläche des zweiten ringförmigen Vorsprungs (15) eingerichtet ist und sich die Überlauföffnung (6) oberhalb des zweiten Hohlraums (8) befindet.

5. Magnetventil nach Anspruch 1, das **dadurch gekennzeichnet ist, dass** das Magnetventil ferner einen Druckstabilisierungsmechanismus umfasst, der zwischen dem ersten Rohr und dem zweiten Rohr (4) eingerichtet ist,
der Druckstabilisierungsmechanismus eine zweite Befestigungsbasis (21) mit einem dritten Hohlraum (20) umfasst, wobei der dritte Hohlraum (20) in Verbindung mit dem ersten Rohr und dem zweiten Rohr (4) steht;
der Druckstabilisierungsmechanismus ferner einen vierten Hohlraum (22), eine erste Unterteilungswand (23), die zwischen dem dritten Hohlraum (20) und dem vierten Hohlraum (22) angeordnet ist, ein bewegbares Element (24), das in dem dritten Hohlraum (20) entlang einer Richtung an nahe oder weg von der ersten Unterteilungswand (23) bewegbar angeordnet ist, und ein zweites elastisches Element (25) umfasst, das in dem vierten Hohlraum (22) angeordnet ist, wobei ein Ende des zweiten elastischen Elements (25) gegen die erste Unterteilungswand (23) angeordnet ist, das andere Ende des zweiten elastischen Elements (25) gegen eine Innenoberfläche des vierten Hohlraums (22) angeordnet ist, und eine elastische Streckrichtung des zweiten elastischen Elements (25) parallel zu einer Bewegungsrichtung des bewegbaren Elements (24) ist.

6. Magnetventil nach Anspruch 5, das **dadurch gekennzeichnet ist, dass** der Druckstabilisierungsmechanismus ferner eine zweite Unterteilungsplatte (26), die auf der ersten Unterteilungsplatte (23) eingerichtet ist und sich in dem dritten Hohlraum (20) befindet, und ein drittes Blockierelement (27) umfasst, das in dem dritten Hohlraum (20) zum Drücken gegen die zweite Unterteilungsplatte (26) angeordnet ist, um einen Wasserstrom von der zweiten Unterteilungsplatte (26) zu dem zweiten Rohr (4) zu blockieren.

7. Magnetventil nach Anspruch 5, das **dadurch gekennzeichnet ist, dass** der Druckstabilisierungsmechanismus ferner ein Einstellelement (28) umfasst, das auf der zweiten Befestigungsbasis (21) zum Drücken gegen das zweite elastische Element (25) einstellbar angeordnet ist, wobei eine Bewegungsrichtung des Einstellelements (28) parallel zu der elastischen Streckrichtung des zweiten elastischen Elements (25) ist.

8. Magnetventil nach Anspruch 5, das **dadurch gekennzeichnet ist, dass** ein fünfter Hohlraum in dem bewegbaren Element (24) bereitgestellt ist und eine Einlassöffnung (29) zum Verbinden des fünften Hohlraums und des dritten Hohlraums (20) an dem bewegbaren Element (24) bereitgestellt ist.

## Revendications

1. Électrovanne comprenant un premier tuyau, un mécanisme électromagnétique (1) pour commander l'ouverture et la fermeture du premier tuyau, et un mécanisme de décompression en communication avec le premier tuyau ;
dans laquelle le mécanisme de décompression comprend une première base de montage (3) avec une première cavité (2), un second tuyau (4) en communication avec la première cavité (2) et le premier tuyau, respectivement, une ouverture de sortie (5) en communication avec la première cavité (2), et une ouverture de trop-plein (6) en communication avec la première cavité (2) et située au-dessus de l'ouverture de sortie (5), dans laquelle en outre une ouverture de communication (7) entre le second tuyau (4) et la première cavité (2) est située en dessous de l'ouverture de sortie (5) ;
le mécanisme de décompression comprend en outre un premier mécanisme mobile disposé dans la première cavité (2) de manière à pouvoir être déplacé vers le haut et vers le bas pour bloquer ou faire communiquer l'ouverture de communication (7) et l'ouverture de sortie (5), et un second mécanisme mobile disposé dans le premier mécanisme mobile de manière à pouvoir être déplacé vers le haut et vers le bas pour bloquer ou faire communiquer l'ouverture de communication (7) et l'ouverture de trop-plein (6) ;
est **caractérisée en ce que,** l'ouverture de communication (7) est située au fond de la première cavité (2), et le mécanisme de décompression comprend en outre un mécanisme d'étanchéité situé au-dessus du second tuyau (4) et couvrant l'ouverture de communication (7) de manière à pouvoir être déplacé vers le haut et vers le bas, dans laquelle le mécanisme d'étanchéité comprend :
une plaque d'étanchéité (17) couvrant l'ouverture de communication (7), qui peut être aspirée sur l'ouverture de communication (7) lorsqu'une pression négative se produit dans le second tuyau (4), et
une colonne de guidage (18) disposée sous la plaque d'étanchéité (17) ;
dans laquelle un trou traversant par lequel passe la colonne de guidage (18) est prévu dans la première base de montage (3), et un bloc d'arrêt (19) pour empêcher la colonne de guidage (18) de sortir du trou traversant vers le haut est prévu sur une partie de l'extrémité inférieure de la colonne de guidage (18).

2. Électrovanne selon la revendication 1, **caractérisée en ce que** le premier mécanisme mobile comprend un corps en forme de colonne (9) avec une deuxième cavité (8), et un séparateur annulaire (10) entourant une partie inférieure du corps en forme de colonne (9), un premier élément de blocage (11) pour appuyer contre une surface inférieure du séparateur annulaire (10) et un deuxième élément de blocage (12) pour appuyer contre une surface supérieure du séparateur annulaire (10) sont prévus dans la première cavité (2), l'ouverture de sortie (5) est située entre le premier élément de blocage (11) et le deuxième élément de blocage (12) dans une direction haut-bas, et l'ouverture de communication (7) est située en dessous du séparateur annulaire (10).

3. Électrovanne selon la revendication 2, **caractérisée en ce que** le premier élément de blocage (11) est annulaire, et l'ouverture de communication (7) est ouverte sur le premier élément de blocage (11).

4. Électrovanne selon l'une quelconque des revendications précédentes, **caractérisée en ce que** le second mécanisme mobile comprend une colonne mobile (13) traversant la deuxième cavité (8) de manière à être mobile vers le haut et vers le bas, une première saillie annulaire (14) située dans la deuxième cavité (8) et entourant une partie inférieure de la colonne mobile (13), une seconde saillie annulaire (15) située au-dessus de la première saillie annulaire (14) et contre une surface intérieure de la deuxième cavité (8), et un premier élément élastique (16) entre la première saillie annulaire (14) et la seconde saillie annulaire (15), un espace est ménagé entre une surface extérieure de la première saillie annulaire (14) et la surface intérieure de la deuxième cavité (8), et un autre espace est ménagé entre la surface extérieure de la colonne mobile (9) et une surface intérieure de la seconde saillie annulaire (15), et l'ouverture de trop-plein (6) est située au-dessus de la deuxième cavité (8).

5. Électrovanne selon la revendication 1, **caractérisée en ce que** l'électrovanne comprend en outre un mécanisme de stabilisation de pression agencé entre le premier tuyau et le second tuyau (4) ;
le mécanisme de stabilisation de pression comprend une seconde base de montage (21) dotée d'une troisième cavité (20), la troisième cavité (20) étant en communication avec le premier tuyau et le second tuyau (4), respectivement ;
le mécanisme de stabilisation de pression comprend en outre une quatrième cavité (22), une première plaque de séparation (23) disposée entre la troisième cavité (20) et la quatrième cavité (22), un élément mobile (24) disposé de manière mobile dans la troisième cavité (20) le long d'une direction proche ou éloignée de la première plaque de séparation (23), et un second élément élastique (25) disposé dans la quatrième cavité (22), une extrémité du second élément élastique (25) est disposée contre la première plaque de séparation (23), l'autre extrémité du second élément élastique (25) est disposée contre une surface intérieure de la quatrième cavité (22), et une direction d'étirement élastique du second élément élastique (25) est parallèle à une direction de déplacement de l'élément mobile (24).

6. Électrovanne selon la revendication 5, **caractérisée en ce que** le mécanisme de stabilisation de pression comprend en outre une seconde plaque de séparation (26) agencée sur la première plaque de séparation (23) et située dans la troisième cavité (20), et un troisième élément de blocage (27) disposé dans la troisième cavité (20) pour appuyer contre la seconde plaque de séparation (26) afin de bloquer l'écoulement de l'eau depuis la seconde plaque de séparation (26) vers le second tuyau (4).

7. Électrovanne selon la revendication 5, **caractérisée en ce que** le mécanisme de stabilisation de pression comprend en outre un élément de réglage (28) disposé de manière réglable sur la seconde base de montage (21) pour appuyer contre le second élément élastique (25), une direction de déplacement de l'élément de réglage (28) est parallèle à la direction d'étirement élastique du second élément élastique (25).

8. Électrovanne selon la revendication 5, **caractérisée en ce qu'**une cinquième cavité est prévue dans l'élément mobile (24), et une ouverture d'entrée (29) pour faire communiquer la cinquième cavité et la troisième cavité (20) est prévue sur l'élément mobile (24).
